# EUROPÄISCHE PATENTSCHRIFT

(11) **EP 2 726 797 B1**
(45) Veröffentlichungstag und Bekanntmachung des Hinweises auf die Patenterteilung: **27.04.2016**
(21) Anmeldenummer: 12745997.2
(22) Anmeldetag: 24.05.2012
(51) Int. Cl.: F24J 2/52

(54) **ANORDNUNG AUS STOCKSCHRAUBE, KLEMMELEMENT UND DICHTUNG, INSBESONDERE FÜR DIE BEFESTIGUNG VON PHOTOVOLTAIKMODULEN AUF DÄCHERN**
ARRANGEMENT OF HANGER BOLT, CLAMPING ELEMENT AND SEAL, IN PARTICULAR FOR SECURING PHOTOVOLTAIC MODULES TO ROOFS
ENSEMBLE CONSTITUÉ DE VIS À DOUBLE FILETAGE, D'ÉLÉMENT DE SERRAGE ET DE JOINT D'ÉTANCHÉITÉ, EN PARTICULIER POUR LA FIXATION DE MODULES PHOTOVOLTAÏQUES SUR DES TOITS

(30) Priorität: 26.05.2011 DE 202011101436 U
(43) Veröffentlichungstag der Anmeldung: 07.05.2014
(73) Patentinhaber: LORENZ-Montagesysteme GmbH, 50858 Köln (DE)
(72) Erfinder: HAHN, Walter, 57555 Brachbach (DE); HANNOTT, Jens, 52445 Titz-Rödingen (DE); MÜLLER, Wolfgang, 53894 Mechenich (DE); STROZYK, Helge, 55118 Mainz (DE)
(74) Vertreter: Kayser, Christoph
(86) Internationale Anmeldenummer: PCT/DE2012/000592
(87) Internationale Veröffentlichungsnummer: WO 2012/159612

(56) Entgegenhaltungen:
- EP-A1- 2 278 172
- EP-A2- 1 840 390
- DE-U1-202006 001 894
- DE-U1-202006 008 867
- DE-U1-202010 010 858
- US-A- 4 369 012
- US-A- 5 707 193
- US-A1- 2010 066 029

## Beschreibung

Die Befestigung von Photovoltaikmodulen auf geneigten oder flachen Dächern wird nach Möglichkeit mittels Tragkonstruktionen vorgenommen, die die Dachhaut nicht oder nur zwischen einzelnen Dachziegeln durchdringen. Im Falle von geneigten Dächern mit Trapezblech- oder Wellprofileindeckung ist es in der Regel jedoch unumgänglich, dass Elemente der Tragkonstruktion unterhalb der Dacheindeckung befestigt werden und die Dacheindeckung nach außen durchdringen.

Als Durchdringungselemente haben sich Stockschrauben bewährt, die mit ihrem unteren Ende in der Dachunterkonstruktion verankert sind und oberhalb der Dacheindeckung mit ihrem oberen Ende, beispielsweise über Adapter, mit der restlichen Tragkonstruktion für die Photovoltaikmodule verbunden sind. Problematisch ist regelmäßig die Abdichtung der Dacheindeckung dort, wo sie von der Stockschraube durchdrungen wird. Hier kommen Dichtungen zwischen dem Rand des Durchbruchs und dem Schaft der Stockschraube zum Einsatz, die von oben in die Lücke zwischen Dacheindeckung und Stockschraube gedrückt werden. Dies geschieht gemäß Stand der Technik mittels einer Mutter, die in ein Gewinde am Schaft der Stockschraube eingreift. Exemplarisch für den Stand der Technik stehen hier die Offenbarungsgehalte der Gebrauchsmusterschriften DE 20 2006 008 867 U1 und DE 20 2005 019 628 U1.

Als nachteilig erweist sich, dass bei mittels Muttern auf die Dacheindeckung und/oder zwischen Dacheindeckung und Stockschraube gedrückten Dichtungen die Gefahr besteht, die Mutter bei der Montage zu stark anzuziehen. Dadurch kann die Dichtung so gequetscht werden, dass sie den Schaft der Stockschraube nicht mehr über die gesamte Kontaktfläche mit der Stockschraube formschlüssig dichtend umschließt. Außerdem wird die Dichtung dabei durch Torsionskräfte belastet. Ein weiterer Nachteil besteht darin, dass die Dichtung, wenn sie im Zuge der Montage über das Gewinde für die Anpressmutter geführt wird, an ihrer Innenmantelfläche Schaden nehmen kann mit der Gefahr einer Beeinträchtigung der Dichtwirkung. Das notwendige Anziehen der Muttern während der Montage wird ebenfalls als nachteilig angesehen, da sowohl zu stark angezogene als auch zu schwach angezogene Muttern die Dichtwirkung mindern und dies während des Montagevorgangs eine Fehlerquelle darstellt. Der Montagefehler wird in der Regel nachteiligerweise erst nach Eintritt eines Schadens durch Undichtigkeiten entdeckt. Darüber hinaus ist der Montageaufwand erhöht aufgrund der Notwendigkeit, ein für die Mutter passendes Werkzeug zur Hand nehmen zu müssen.

Es stellt sich daher die Aufgabe, eine Stockschraube und die dazu passende Dichtung so zu modifizieren, dass die genannten Nachteile beseitigt werden. Darüber hinaus soll eine vormontierte Anordnung aus Stockschraube und Dichtung bereit gestellt werden, deren Dichtwirkung zuverlässig ohne Werkzeug in einem einfachen Montageschritt herbei geführt. werden kann. Die Dichtung sollte außerdem so modifiziert werden, dass sie an zwei verschiedenen Kontaktflächen ihre Dichtwirkung entfaltet.

Dies gelingt mittels einer Anordnung aus Stockschraube, Klemmelement und Dichtung gemäß Anspruch 1, mittels einer Stockschraube gemäß Anspruch 22, einem Klemmelement gemäß Anspruch 23 und einer Dichtung gemäß Anspruch 24. Vorteilhafte Ausführungsformen der Anordnung ergeben sich aus den Unteransprüchen.

Im Gegensatz zu den im Stand der Technik üblichen Stockschrauben weist die hier vorgeschlagene Stockschraube zwischen ihrem oberen und ihrem unteren Ende einen gewindefreien Schaft auf. Anstelle der üblichen Mutter ist bei der erfindungsgemäßen Anordnung ein Klemmelement oberhalb der Dichtung angeordnet, das während des betreffenden Montageschritts so am Schaft der Stockschraube positioniert wird, dass es dem Schaft klemmend anliegt und einer im Betriebszustand gegen die Unterseite des Dichtkörpers wirkenden Anpresskraft reibschlüssig entgegensteht.

Um eine gut handhabbare vormontierte Anordnung zu erhalten ist es dabei vorteilhaft, wenn das Klemmelement der Dichtung unmittelbar aufliegt oder diese sogar in das Klemmelement integriert ist. Ebenso sind aber auch Ausführungsformen möglich, bei denen ein weiteres Bauteil zwischen Klemmelement und Dichtung angeordnet ist. Um das Klemmelement materialsparend und vergleichsweise klein ausführen zu können, ist es von Vorteil, wenn die Stockschraube eine im Wesentlichen rechtwinklig zu ihrer Längsachse verlaufende Einkerbung aufweist, in die das Klemmelement formschlüssig eingreift. Mehrere parallel zueinander angeordnete Einkerbungen ermöglichen ein Einrasten des Klemmelements in verschiedenen Positionen, von denen bei der Montage die günstigste gewählt werden kann. Im Unterschied zu dem Festziehen einer Mutter wird das Klemmelement händisch heruntergedrückt und erlaubt daher bereits während des betreffenden Montageschritts eine haptische Kontrolle der auf die Dichtung wirkenden Kraft. Vorteilhaft ist es, die Tiefe und Form der Einkerbung so auf die Elastizität der Dichtung abzustimmen, dass der Reibschluss zwischen Klemmelement und Einkerbung überwunden wird, sobald die elastische Verformung der Dichtung ein Maß übersteigt, ab dem, analog des Effekts einer zu stark angezogenen Mutter, die Dichtwirkung beeinträchtigt würde.

Um die erfindungsgemäße Anordnung von Stockschraube und Dichtung bereitstellen zu können, muss die Dichtung von oben oder unten auf den Schaft der Stockschraube geschoben werden. Es ist deshalb vorteilhaft, dass der Außendurchmesser des vorzugsweise selbstschneidenden Gewindes am unteren Ende der Stockschraube, das beispielsweise der Verbindung mit einer Dachunterkonstruktion dienen kann, nicht größer als der Durchmesser des gewindefreien Schafts ist, der sowohl im vormontierten Bereitschaftszustand der Anordnung als auch in deren Betriebszustand von der Dichtung umschlossen ist. Die Dichtung lässt sich besonders schonend über das gewindetragende untere Ende der Stockschraube schieben, wenn zwischen dem Schaft und dem Gewinde ein Abschnitt angeordnet ist, dessen Umfang von dem Umfang des Schafts bis auf den Kernumfang des Gewindes stetig abnimmt. Es kann jedoch auch von Vorteil sein, dass der Umfang des Abschnitts sprunghaft abnimmt, wie beispielsweise bei einer Stufe, um eine Begrenzung der Einschraubtiefe vorzugeben.

Der Schaft kann entlang seiner gesamten Länge von der Dichtung umschlossen sein, er kann aber, wegen der Materialersparnis bevorzugt, lediglich entlang eines Abschnitts, also eines Teils seiner Gesamtlänge, von der Dichtung umschlossen sein. In vorteilhaften Ausführungsformen liegt die Dichtung dem Schaft dabei ganz oder abschnittsweise formschlüssig und dichtend an. So ergeben sich wenigstens zwei unterschiedliche Kontaktflächen der Dichtung, an denen sie jeweils ihre dichtende Wirkung entfalten kann, nämlich einerseits die Kontaktfläche zwischen Schaft und Dichtung und andererseits die Kontaktfläche zwischen dem von der Stockschraube durchdrungenen Bauteil, beispielsweise einer Dacheindeckung, und der Dichtung.

Beide Kontaktflächen lassen sich vorteilhaft ausgestalten. Die Kontaktfläche mit dem Schaft kann vorteilhaft eine Riffelung aufweisen, die komplementär zu einer Riffelung am Schaft ist. Durch den zusätzlichen Formschluss und die damit einhergehende Vergrößerung der Kontaktfläche erhöht sich die Dichtwirkung. Die Kontaktfläche an der Unterseite des Dichtkörpers weist vorteilhafterweise wenigstens eine umlaufende Dichtlippe auf, die vorzugsweise schräg zur Mittelachse der Ausnehmung angeordnet ist, die durch den Dichtkörper von dessen Ober- zu dessen Unterseite verläuft. Die so angeordnete Dichtlippe wird durch eine von einer im Wesentlichen planen Oberfläche auf sie einwirkenden Anpresskraft, je nach Orientierung der Schrägstellung, elastisch nach außen oder nach innen verformt. Die Dichtlippe setzt dadurch nicht nur im Querschnitt punktuell mit ihrer Unterkante auf die Oberfläche des von der Stockschraube durchdrungenen Bauteils auf sondern, wenn sie nach außen weggedrückt wird, mit ihrer Innenflanke, und wenn sie nach innen weggedrückt wird mit ihrer Außenflanke. Dadurch vergrößert sich auch diese Kontaktfläche der Dichtung mit der Folge einer zusätzlichen Erhöhung der Dichtwirkung. Eine neben der Dichtlippe angeordnete Einbuchtung in den Dichtkörper hat den Vorteil, dass die Dichtlippe mehr Spiel für die elastische Verformung hat und breiter aufsetzen kann. Die Einbuchtung spart gegenüber einem Dichtkörper mit einer Dichtlippe gleicher Länge Material bei zugleich verbreiterter Auflagefläche für die Dichtlippe. Optimal ist die Einbuchtung an der Seite der Dichtlippe angeordnet, zu der diese weggedrückt wird, wobei sie so dimensioniert sein sollte, dass sie bei der zu erwartenden Anpresskraft auf die Unterseite der Dichtung von der Dichtlippe geschlossen wird. Selbstverständlich sind auch Sonderausführungen der Dichtung mit einer Mehrzahl von Dichtlippen möglich.

Schließlich ist es vorteilhaft, an der Unterseite des Dichtkörpers der Dichtung eine Stützlippe anzuordnen, die innerhalb des Umfangs der Dichtlippe angeordnet ist, im Bereitschaftszustand der Anordnung weiter oben als die Dichtlippe endet und im Betriebszustand der Anordnung ein zu starkes und potentiell rissverursachendes Abknicken der Dichtlippe verhindert und dabei selbst eine Abdichtung bewirkt. Vorteilhafterweise ist sie nicht schräg sondern achsparallel zur Ausnehmung des Dichtkörpers angeordnet. Die Mittelachse der Ausnehmung des Dichtkörpers verläuft dabei vorteilhafterweise parallel zur Längsachse der Stockschraube.

Eine Möglichkeit die Produktion der Stockschraube einfacher zu gestalten besteht darin, die Riffelung am Schaft so zu gestalten, dass die einzelnen Riefen als Einkerbung für den Formschluss mit dem Klemmelement dienen können. Vorteilhafterweise sollten die Riefen jedoch nicht tiefer als 200 µm sein, um eine Schädigung der Dichtung bei der Herbeiführung des Formschlusses mit der komplementären Riffelung der Dichtung zum vermeiden.

Das Klemmelement ist vorteilhafterweise so ausgestaltet, dass es einen umlaufenden, im Wesentlichen planen Randbereich, eine Mittelöffnung und eine ungerade Anzahl von Federelementen, bevorzugt Blattfedern, aufweist, die entlang ihrer Seitenkanten zur Mittelöffnung weisen. Der Durchmesser der von den Federelementen gebildeten Mittelöffnung sollte vorzugsweise etwas kleiner als der Durchmesser des Schafts der Stockschraube sein, so dass sich im Bereitschafts- und Betriebszustand der Anordnung ein Anstellwinkel der Federelemente, vorzugsweise Blattfedern, gegenüber dem Randbereich des Klemmelements von 5° bis 9°, vorzugsweise 6° bis 8° ergibt. Materialstärke, Formgebung und Winkel gegenüber dem Randbereich der Federelemente können dafür variiert werden.

Als vorteilhaft für die fertigungstechnische Einstellbarkeit eines konstanten Reibschlusses zwischen dem Schaft der Stockschraube und dem Klemmelement hat es sich erwiesen, wenn Blattfedern verwendet werden, die die Form eines symmetrischen Trapezes aufweisen mit dem Unterschied, das deren Grundseiten jeweils entlang einer Kreislinie gekrümmt sind. Die Konstanz der Federwirkung, deren Nachlassen sich nachteilig auf die Dichtwirkung der Dichtung auswirken kann, kann vorteilhaft gesteigert werden, wenn die Übergänge der Seitenkanten der Blattfedern zu dem Randbereich des Klemmelements abgerundet sind. Um eine gleichmäßige Belastung der Blattfedern zu gewährleisten, ist es von Vorteil, wenn die Anzahl der gegen den Schaft der Stockschraube gespannten Blattfedern ungerade ist, um ein unerwünschtes Kippen des Klemmelements am Schaft weitgehend zu vermeiden. Ein guter Kompromiss zwischen der im Zuge händischer Montage erreichbaren bezüglich gleichmäßiger Belastung der Blattfedern optimal austarierten Lage des Klemmelements und fertigungstechnischem Aufwand ist eine Anzahl von fünf Blattfedern. Weiterhin ist es vorteilhaft, wenn die für den klemmenden Kontakt mit dem Schaft der Stockschraube vorgesehenen Enden der Blattfedern des Klemmelements in einer zwar parallelen aber anderen Ebene als deren Übergänge zum Randbereich angeordnet sind. Dadurch ist im entspannten Zustand der Blattfedern bereits ein Anstellwinkel von beispielsweise 6° vorgegeben, der sich durch das Aufschieben des Klemmelements auf den gewindefreien Schaft der Stockschraube nur noch wenig vergrößert, beispielsweise auf 8°. Durch einen solchen bereits im entspannten Zustand vorgearbeiteten Anstellwinkel der Blattfedern tritt ein Selbsthemmeffekt ein, der eine Bewegung zum oberen Ende der Stockschraube im Vergleich zu der gleitenden Bewegung in Richtung des unteren Endes erschwert, wenn die Blattfedern in Richtung des oberen Endes der Stockschraube abgewinkelt sind, und so die Zuverlässigkeit der Dichtwirkung erhöht.

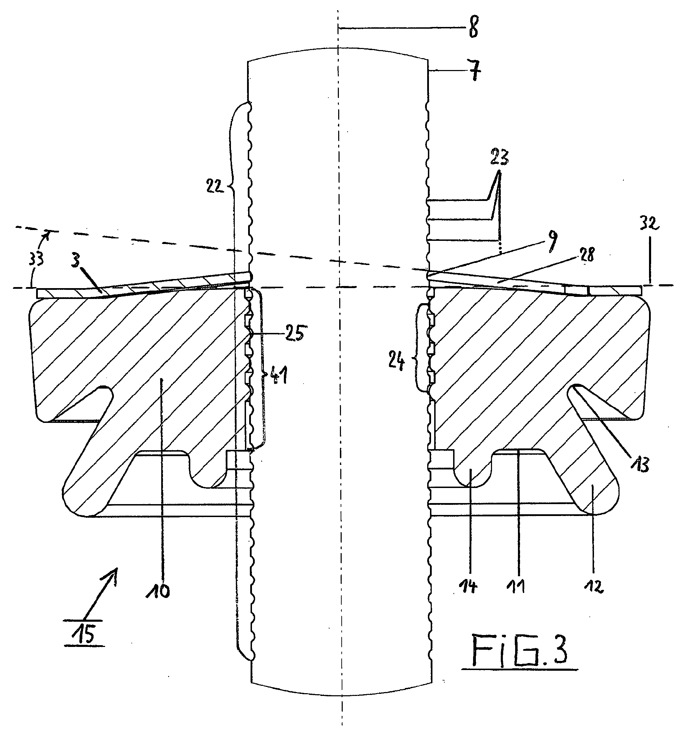

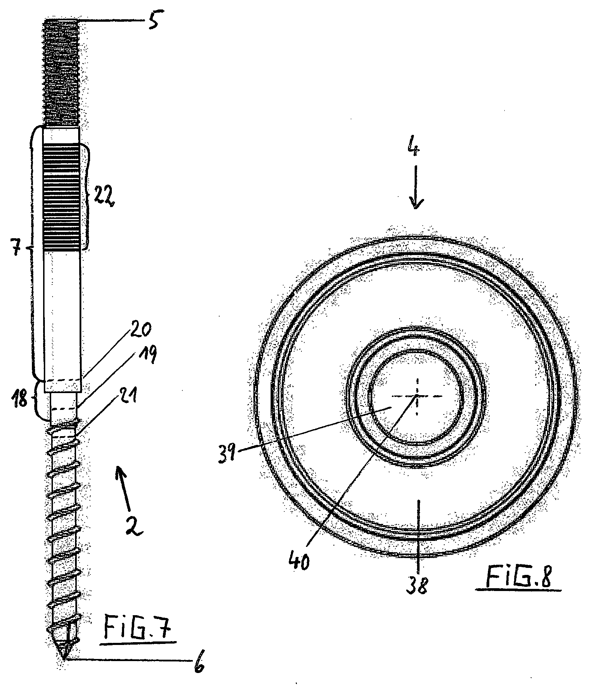

Nachfolgend wird anhand der Zeichnungen ein bevorzugtes Ausführungsbeispiel der erfindungsgemäßen Anordnung sowie der für diese vorzugsweise zu verwendenden Komponenten näher erläutert.

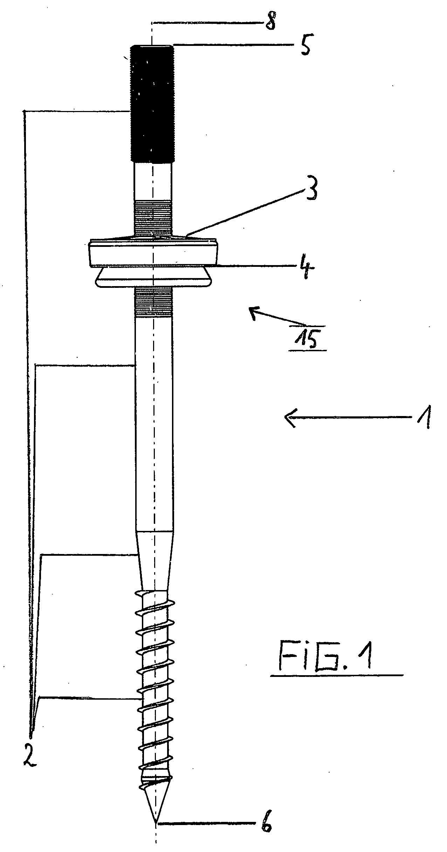

**Fig. 1** zeigt ein Ausführungsbeispiel der Anordnung (1) in der Seitenansicht mit den einzelnen Bestandteilen Stockschraube (2), Klemmelement (3) und Dichtung (4) im Bereitschaftszustand (15). Zur besseren Orientierung sind das obere (5) und das untere (6) Ende der Stockschraube (2) sowie deren Längsachse (8) gezeigt.

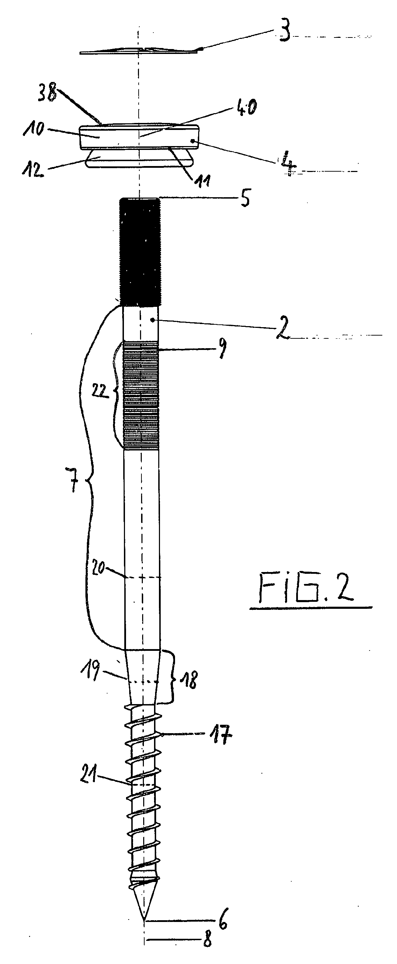

**Fig. 2** zeigt eine Explosionsansicht der einzelnen Bestandteile (2, 3, 4) der Anordnung (1) von der Seite. Zu sehen ist oben das Klemmelement (3), das hier vorteilhaft und materialsparend als Klemmscheibe ausgeführt ist.
   Darunter folgt die Dichtung (4) mit Dichtkörper (10), an dessen. Unterseite (11) die umlaufende Dichtlippe (12), die hier zur Verbreiterung der Auflagefläche und Erhöhung der Dichtwirkung schräg zur Mittelachse (40) der von der Ober- (38) zur Unterseite (11) verlaufenden Ausnehmung (siehe **Fig. 8****,** Ziff. 39) des Dichtkörpers (10) angeordnet ist.
   Unterhalb der Dichtung (4) ist ein Ausführungsbeispiel der Stockschraube (2) gezeigt, bei dem am oberen Ende (5), oberhalb des gewindefreien Schafts (7) ein metrisches Gewinde angeordnet ist, das Schraubverbindungen zu anderen Bauteilen ermöglicht. Der gewindefreie Schaft (7) weist hier eine senkrecht zur Längsachse (8) angeordnete Riffelung (22) mit integrierter Einkerbung (9) auf, in die das Klemmelement (3) eingreifen kann, die die Kontaktfläche des Formschlusses zwischen Dichtung (4) und Schaft (7) vergrößert und die im Zusammenspiel mit den Stegen (siehe **Fig. 3****,** Ziff. 25) an der Innenmantelfläche (siehe **Fig. 3****,** Ziff. 41) der komplementären Riffelung (siehe **Fig. 3****,** Ziff. 24) des Dichtkörpers (10) die Dichtwirkung erhöht. Der Durchmesser des Schafts (7) ist bei diesem Ausführungsbeispiel geringer als der Außendurchmesser des metrischen Gewindes, jedoch größer oder gleich dem Außendurchmesser des selbstschneidenden Gewindes (17) am unteren Ende (6) der Stockschraube (2), so dass die Dichtung (4) zweckmäßigerweise über das untere Ende (6) in Position gebracht wird, um ein Aufweiten der Dichtung (4) zu vermeiden. Erleichtert wird dieser Vorgang durch den Abschnitt (18) zwischen Schaft (7) und dem selbstschneidenden Gewinde (17), dessen Umfang (19) vom Umfang (20) des Schafts (7) stetig zum Kernumfang (21) des selbstschneidenden Gewindes (17) abnimmt.

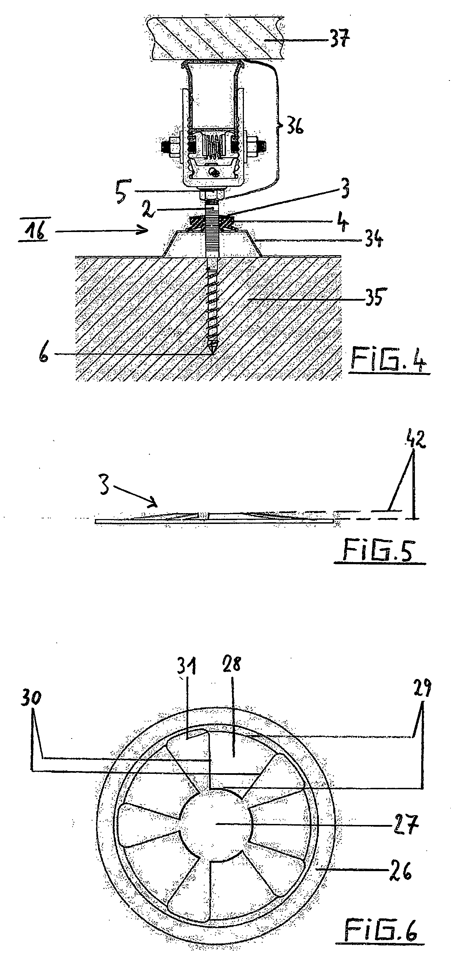

**Fig. 3** zeigt den Schaft (7) mit dem Klemmelement (3) und der Dichtung (4) im Längsschnitt im Bereitschaftszustand (15). Zu erkennen ist hier die Riffelung (22) des Schafts (7) sowie die komplementäre Riffelung (24) an der Innenmantelfläche (41) des Dichtkörpers (10), deren Stege (25) in einzelne Riefen (23) der Riffelung (22) eingreifen. In die Riffelung (22) integriert ist bei diesem Ausführungsbeispiel die Einkerbung (9) des Schafts (7), in die das Klemmelement (3) eingreift. Die Blattfedern (28) des Klemmelements (3) weisen hier im Bereitschaftszustand (15) ebenso wie im Betriebszustand (siehe **Fig. 4****,** Ziff. 16) einen Anstellwinkel (33) von 8° auf bezogen auf eine orthogonal zur Längsachse (8) verlaufenden Ebene (32). An der Unterseite (11) des Dichtkörpers ist eine umlaufende Dichtlippe (12) angeordnet sowie eine hier ebenfalls umlaufende Stützlippe (14), wobei die Dichtlippe (12) im hier gezeigten Bereitschaftszustand (15) unterhalb der Stützlippe (14) endet. Primäre Aufgabe der Stützlippe (14) neben einer zusätzlichen Abdichtung ist es hier, ein zu starkes Abknicken der Dichtlippe (12) im Betriebszustand (sieh **Fig. 4****,** Ziff. 16) zu verhindern und die Gefahr des Einreißens der Dichtung (4) zu minimieren. Neben der Dichtlippe (12) weist der Dichtkörper (10) eine Einbuchtung (13) auf, die bei elastischer Verformung der Dichtlippe (12) im Betriebszustand (siehe **Fig. 4****,** Ziff. 16) durch die Dichtlippe (12) verkleinert oder geschlossen wird und dadurch, dass sie auf der Seite angeordnet ist, zu der die Dichtlippe (12) aufgrund ihrer Schrägstellung bezüglich der Mittelachse (40) der Ausnehmung (siehe **Fig. 8****,** Ziff. 39) des Dichtkörpers (10) elastisch verformt wird, also weiter außen als die Dichtlippe (12), der Dichtlippe (12) mehr Raum für die elastische Verformung bei gleichzeitiger Materialersparnis für die Dichtung (4) verfügbar macht.
**Fig. 4** zeigt den Längsschnitt eines Ausführungsbeispiels der Anordnung (1) im Betriebszustand (16), bei der die Anordnung (1) zur Befestigung eines Photovoltaikmoduls (37) auf einem Dach dient, wobei das untere Ende (6) der Stockschraube (2) mit der Dachunterkonstruktion (35) verbunden ist und das obere Ende (5) der Stockschraube (2) über eine Tragkonstruktion (36) mit dem Photovoltaikmodul (37) verbunden ist. Dabei übt die Dacheindeckung (34) eine Anpresskraft auf die Dichtung (4) aus, der der Reibschluss des Klemmelements (3) mit der Stockschraube (2) entgegenwirkt.
**Fig. 5** zeigt das Klemmelement (3), das hier als Klemmscheibe ausgeführt ist, in der Seitenansicht. Zu erkennen sind hier die unterschiedlichen, zueinander parallelen Ebenen (42), in denen die innere und äußere Kreislinie verlaufen, auf denen jeweils die inneren und äußeren Grundseiten (siehe **Fig. 6****,** Ziff. 29) der Blattfedern (siehe **Fig. 6****.,** 28) des Klemmelements (3) angeordnet sind, deren Form von derjenigen eines symmetrischen Trapezes abgeleitet sind durch Krümmung von dessen Grundseiten jeweils entlang einer Kreislinie.
**Fig. 6** zeigt das Klemmelement (3) aus **Fig. 5** von oben mit den Blattfedern (28), deren Anzahl hier vorteilhafterweise fünf beträgt und so Kippbewegungen am Schaft (siehe **Fig. 3****,** Ziff. 7) vorbeugt. Zu erkennen sind die jeweils entlang einer Kreislinie gekrümmten Grundseiten (29) eines durch die Krümmungen abgewandelten symmetrischen Trapezes ebenso wie die Seitenkanten (30) der Blattfedern (28), der Randbereich (26), die Mittelöffnung (27) und die Rundungen der Seitenkanten (30) am Übergang (31) zum Randbereich (26).
**Fig. 7** zeigt die Seitenansicht eines leicht variierten Ausführungsbeispiels der Stockschraube (2), mit gewindefreiem Schaft (7) zwischen oberem (5) und unterem (6) Ende und darunter angeordnetem Abschnitt (18), dessen Umfang (19) hier sprunghaft vom Umfang (20) des Schafts (7) zum Kernumfang (21) des selbstschneidenden Gewindes (17) abnimmt und so einen Widerstand beim Einschrauben des selbstschneidenden Gewindes (17) spürbar werden lässt. Oberhalb des Schafts (7) ist hier ein metrisches Gewinde angeordnet, dessen äußerer Umfang den (20) des Schafts (7) nicht überschreitet, so dass die Möglichkeit besteht, die Dichtung (siehe **Fig. 8****,** Ziff. 4) über das obere Ende (5) am Schaft (7) zu positionieren.
**Fig. 8** zeigt die Dichtung (4) in der Aufsicht. Zu erkennen ist die Oberseite (38), die von der Ober- (38) zur Unterseite (siehe **Fig. 3****,** Ziff. 11) verlaufende Ausnehmung (39) sowie deren Mittelachse (40) als Punkt.

## Patentansprüche

1. Anordnung (1) aus Stockschraube (2), Klemmelement (3) und Dichtung (4), insbesondere für die Befestigung von Photovoltaikmodulen (37) auf Dächern,
**dadurch gekennzeichnet,**
**dass** die Stockschraube (2) zwischen ihrem oberen (5) und unteren (6) Ende einen gewindefreien Schaft (7) aufweist, der (7) von der Dichtung (4) umschlossen ist und an dem das Klemmelement (3) oberhalb der Dichtung (4) klemmend anliegt, der (7) von der Dichtung (4) umschlossen ist. und dass die Dichtung (4) ganz oder teilweise umlaufend formschlüssig und dichtend dem Schaft (7) anliegt und einen Dichtkörper (10) aufweist, an dessen vom Klemmelement (3) abgewandten Unterseite (11) wenigstens eine umlaufende Dichtlippe (12) schräg zur Längsachse (8), eine Stützlippe (14) parallel zur Längsachse (8) der Stockschraube (2) und neben der Dichtlippe (12) eine Einbuchtung (13) angeordnet ist, wobei in einem Bereitschaftszustand (15) der Anordnung (1) die Dichtlippe (12) unterhalb der Stützlippe (14) endet und in einem Betriebszustand (16) die durch eine Anpresskraft elastisch verformte Dichtlippe (12) auf Höhe der Stützlippe (14) endet und die Einbuchtung (13) bezüglich des Bereitschaftszustands (15) verkleinert oder schließt und das Klemmelement (3) der gegen die Unterseite des Dichtkörpers wirkenden Anpresskraft reibschlüssig entgegensteht.

2. Anordnung (1) nach Anspruch 1,
**dadurch gekennzeichnet,**
**dass** der Schaft (7) wenigstens eine im Wesentlichen rechtwinklig zur Längsachse (8) der Stockschraube (2) verlaufende Einkerbung (9) aufweist, in die das Klemmelement (3) eingreift.

3. Anordnung (1) nach einem der vorhergehenden Ansprüche,
**dadurch gekennzeichnet,**
**dass** die Stockschraube (2) an dem Schaft (7) ihren größten Umfang aufweist und an ihrem unteren Ende (6) ein vorzugsweise selbstschneidendes Gewinde (17) aufweist, dessen Außendurchmesser gleich dem oder geringer als der Durchmesser des Schafts (7) ist, und zwischen dem Schaft (7) und dem Gewinde (17) ein Abschnitt (18) angeordnet ist, dessen Umfang (19) von dem Umfang (20) des Schafts (7) bis auf den Kernumfang (21) des Gewindes (17) stetig oder sprunghaft abnimmt.

4. Anordnung (1) nach einem der vorhergehenden Ansprüche,
**dadurch gekennzeichnet,**
**dass** der Schaft (7) auf Höhe des Dichtkörpers (10) wenigstens eine im Wesentlichen rechtwinklig zur Längsachse (8) der Stockschraube (2) verlaufende, die Einkerbung (9) umfassende Riffelung (22) mit einer Mehrzahl von gleichmäßig voneinander beabstandeten Riefen (23) aufweist, wobei die Stege (25) einer komplementären Riffelung (24) des Dichtkörpers (10) in einzelne Riefen (23) der Riffelung (22) des Schafts (7) greifen.

5. Anordnung (1) nach einem der vorhergehenden Ansprüche,
**dadurch gekennzeichnet,**
**dass** die einzelnen Riefen (23) der Riffelung (22) nicht tiefer als 200 µm sind.

6. Anordnung (1) nach einem der vorhergehenden Ansprüche,
**dadurch gekennzeichnet,**
**dass** das Klemmelement (3) einen umlaufenden Randbereich (26), eine vom Schaft (7) durchdrungene Mittelöffnung (27) und eine Anzahl von Federelementen (28), vorzugsweise Blattfedern, aufweist, die vom Randbereich (26) zur Mittelöffnung (27) weisen.

7. Anordnung (1) nach Anspruch 6,
**dadurch gekennzeichnet,**
**dass** die Federelemente (28) im Wesentlichen die Form eines symmetrischen Trapezes aufweisen, mit dem Unterschied, dass dessen Grundseiten (29) jeweils entlang einer Kreislinie gekrümmt sind.

8. Anordnung (1) nach einem der Ansprüche 6 bis 7,
**dadurch gekennzeichnet,**
**dass** die Federelemente (28) Seitenkanten (30) aufweisen, die an ihren Übergängen (31) zum Randbereich (26) des Klemmelements (3) gerundet sind.

9. Anordnung (1) nach einem der Ansprüche 6 bis 8,
**dadurch gekennzeichnet,**
**dass** die Federelemente (28) gegen den Schaft (7) gespannt sind und gegenüber einer orthogonal zur Längsachse (8) der Stockschraube (2) verlaufenden Ebene (32) einen Anstellwinkel (33) zwischen 5° und 9°, vorzugsweise zwischen 6° und 8° aufweisen.

10. Anordnung (1) nach einem der Ansprüche 6 bis 9,
**dadurch gekennzeichnet,**
**dass** das Klemmelement (3) eine ungerade Anzahl von Federelementen (28) aufweist.

11. Anordnung (1) nach einem der vorhergehenden Ansprüche,
**dadurch gekennzeichnet,**
**dass** die Dichtung (4) in das Klemmelement (3) integriert ist.

12. Anordnung (1) nach einem der vorhergehenden Ansprüche,
**dadurch gekennzeichnet,**
**dass** die Stockschraube (2) eine Dacheindeckung (34) durchdringt, die im Betriebszustand (16) von unten eine Anpresskraft auf die Dichtung (4) ausübt.

13. Anordnung (1) nach Anspruch 12,
**dadurch gekennzeichnet,**
**dass** die Stockschraube (2) mit ihrem unteren Ende (6) unterhalb der Dacheindeckung (34) mit einer Dachunterkonstruktion (35) verbunden ist und mit ihrem oberen Ende (5) oberhalb der Dacheindeckung (34) mit einer Tragkonstruktion (36) für Photovoltaikmodule (37) verbunden ist.

## Claims

1. An arrangement (1) made up of hanger bolt (2), clamping element (3) and seal (4), particularly for fastening photovoltaic modules (37) on roofs,
**characterised**
**in that** the hanger bolt (2) has a threadless shaft (7) between its upper (5) and lower (6) ends, which (7) is surrounded by the seal (4) and against which the clamping element (3) bears in a clamping manner above the seal (4), and in that the seal (4) bears against the shaft (7), surrounding the same completely or in part in a positive-fitting and sealing manner, and has a sealing body (10), on the underside (11) of which, which underside faces away from the clamping element (3), at least one surrounding sealing lip (12) is arranged obliquely to the longitudinal axis (8), a supporting lip (14) is arranged parallel to the longitudinal axis (8) of the hanger bolt (2) and an indentation (13) is arranged next to the sealing lip (12), wherein in a ready state (15) of the arrangement (1), the sealing lip (12) ends below the supporting lip (14) and in an operating state (16), the sealing lip (12), which is elastically deformed by a pressure force ends at the height of the supporting lip (14) and the indentation (13) reduces in size or closes compared to the ready state (15) and the clamping element (3) opposes the pressure force, which is acting against the underside of the sealing body, in a frictionally-engaged manner.

2. The arrangement (1) according to Claim 1,
**characterised**
**in that** the shaft (7) has an indentation (9) essentially running at right angles to the longitudinal axis (8) of the hanger bolt (2), into which indentation the clamping element (3) engages.

3. The arrangement (1) according to one of the preceding claims,
**characterised**
**in that** the hanger bolt (2) has its largest circumference at the shaft (7) and has a preferably self-cutting thread (17) at its lower end (6), the outer diameter of which thread is equal to or smaller than the diameter of the shaft (7), and a section (18) is arranged between the shaft (7) and the thread (17), the circumference (19) of which section decreases steadily or abruptly from the circumference (20) of the shaft (7) to the core circumference (21) of the thread (17).

4. The arrangement (1) according to one of the preceding claims,
**characterised**
**in that** the shaft (7) has at least one set of grooves (22) at the height of the sealing body (10) running essentially at right angles to the longitudinal axis (8) of the hanger bolt (2) and comprising the indentation (9), with a plurality of scores (23) that are equally spaced from one another, wherein the ridges (25) of a complementary set of grooves (24) of the sealing body (10) engage into individual scores (23) of the set of grooves (22) of the shaft (7).

5. The arrangement (1) according to one of the preceding claims,
**characterised**
**in that** the individual scores (23) of the set of grooves (22) are not deeper than 200 µm.

6. The arrangement (1) according to one of the preceding claims,
**characterised**
**in that** the clamping element (3) has .a circumferential edge region (26), a central opening (27) penetrated by the shaft (7) and a number of spring elements (28), preferably leaf springs, which point from the edge region (26) to the central opening (27).

7. The arrangement (1) according to Claim 6,
**characterised**
**in that** the spring elements (28) essentially have the shape of a symmetrical trapezium, with the difference that the base sides (29) thereof are curved along a circular line in each case.

8. The arrangement (1) according to one of Claims 6 to 7,
**characterised**
**in that** the spring elements (28) have side edges (30), which are rounded at their transitions (31) to the edge region (26) of the clamping element (3).

9. The arrangement (1) according to one of Claims 6 to 8,
**characterised**
**in that** the spring elements (28) are tensioned against the shaft (7) and have a setting angle (33) of between 5° and 9°, preferably between 6° and 8°, with respect to a plane (32) running orthogonally to the longitudinal axis (8) of the hanger bolt (2).

10. The arrangement (1) according to one of Claims 6 to 9,
**characterised**
**in that** the clamping element (3) has an odd number of spring elements (28).

11. The arrangement (1) according to one of the preceding claims,
**characterised**
**in that** the seal (4) is integrated into the clamping element (3).

12. The arrangement (1) according to one of the preceding claims,
**characterised**
**in that** the hanger bolt (2) penetrates a roof covering (34), which exerts a pressure force on the seal (4) from below in the operating state (16).

13. The arrangement (1) according to Claim 12,
**characterised**
**in that** the hanger bolt (2) is connected by way of the lower end (6) thereof below the roof covering (34) to a roof substructure (35) and is connected by way of the upper end (5) thereof above the roof covering (34) to a supporting structure (36) for photovoltaic modules (37).

## Revendications

1. Dispositif (1) comprenant une vis (2) à double serrage, un élément de serrage (3) et un joint (4), destiné notamment à assurer la fixation de modules photovoltaïques (37) sur des toits,
**caractérisé en ce que**
entre son extrémité supérieure (5) et inférieure (6), la vis (2) à double filetage comporte une tige (7) non filetée, qui (7) est entourée par le joint (4) et à laquelle l'élément de serrage (3) est adjacent en assurant le serrage au-dessus du joint (4) et **en ce que** le joint (4) est adjacent à la tige (7), sur sa périphérie totale ou partielle, par complémentarité de forme et en assurant l'étanchéité et comporte un organe d'étanchéité (10), sur la face inférieure (11) opposée à l'élément de serrage (3) duquel, au moins une lèvre d'étanchéité (12) périphérique est placée en diagonale de l'axe longitudinal (8), une lèvre d'appui (14) est placée à la parallèle de l'axe longitudinal (8) de la vis (2) à double filetage et à côté de la lèvre d'étanchéité (12) est placé un creux (13), dans un état prêt à l'emploi (15) du dispositif (1), la lèvre d'étanchéité (12) se terminant en-dessous de la lèvre d'appui (14) et dans un état de service (16), la lèvre d'étanchéité (12) élastiquement déformée par une force de compression se terminant au niveau de la lèvre d'appui (14) et réduisant le creux (13) par rapport à l'état prêt à l'emploi (15) ou le fermant et l'élément de serrage (3) s'opposant par frottement à la force de compression agissant contre la face inférieure de l'organe d'étanchéité.

2. Dispositif (1) selon la revendication 1,
**caractérisé en ce que**
la tige (7) comporte au moins une gorge (9) s'étendant sensiblement à angle droit par rapport à l'axe longitudinal (8) de la vis (2) à double filetage, dans laquelle s'engage l'élément de serrage (3).

3. Dispositif (1) selon l'une quelconque des revendications précédentes,
**caractérisé en ce que**
la vis (2) à double filetage présente sa plus grande circonférence sur la tige (7) et sur son extrémité inférieure (6), comporte un filetage (17) de préférence auto-taraudeur dont le diamètre extérieur est égal ou inférieur au diamètre de la tige (7) et entre la tige (7) et le filetage (17) est placé un tronçon (18) dont la circonférence (19) décroît de manière continue ou discontinue, de la circonférence (20) de la tige (7) jusqu'à la circonférence d'âme (21) du filetage (17).

4. Dispositif (1) selon l'une quelconque des revendications précédentes,
**caractérisé en ce**
**qu'**au niveau de l'organe d'étanchéité (10), la tige (7) comporte au moins une cannelure (22) s'étendant sensiblement à angle droit par rapport à l'axe longitudinal (8) de la vis (2) à double filetage, entourant la gorge (9), avec une pluralité de stries (23) présentant un écart mutuel régulier, les listels (25) d'une cannelure (24) complémentaire de l'organe d'étanchéité (10) s'engageant dans des stries (23) individuelles de la cannelure (22) de la tige (7).

5. Dispositif (1) selon l'une quelconque des revendications précédentes,
**caractérisé en ce que**
les stries (23) individuelles de la cannelure (22) ne sont pas plus profondes que 200 µm.

6. Dispositif (1) selon l'une quelconque des revendications précédentes,
**caractérisé en ce que**
l'élément de serrage (3) comporte une zone marginale (26) périphérique, un orifice central (27) traversé par la tige (7) et un nombre d'éléments à ressort (28) de préférence des ressorts à lames, qui sont dirigés de la zone marginale (26) vers l'orifice central (27).

7. Dispositif (1) selon la revendication 6,
**caractérisé en ce que**
les éléments à ressort (28) présentent sensiblement la forme d'un trapèze symétrique, à la différence près que leurs bases (29) sont chacune incurvées le long d'une ligne de circonférence.

8. Dispositif (1) selon l'une quelconque des revendications 6 et 7,
**caractérisé en ce que**
les éléments à ressort (28) comportent des arêtes latérales (30) qui sur leurs transitions (31) vers la zone marginale (26) de l'élément de serrage (3) sont arrondies.

9. Dispositif (1) selon l'une quelconque des revendications 6 à 8,
**caractérisé en ce que**
les éléments à ressort (28) sont contraints contre la tige (7) et présentent par rapport à un plan (32) s'étendant de manière orthogonale par rapport à l'axe longitudinal (8) de la vis (2) à double filetage un angle d'incidence (33) compris entre 5° et 9°, de préférence entre 6° et 8°.

10. Dispositif (1) selon l'une quelconque des revendications 6 à 9,
**caractérisé en ce que**
l'élément de serrage (3) comporte un nombre impair d'éléments à ressort (28).

11. Dispositif (1) selon l'une quelconque des revendications précédentes,
**caractérisé en ce que**
le joint (4) est intégré dans l'élément de serrage (3).

12. Dispositif (1) selon l'une quelconque des revendications précédentes,
**caractérisé en ce que**
la vis (2) à double filetage traverse une couverture de toit (34), qui dans l'état de service (16) exerce par le bas une force de compression sur le joint (4).

13. Dispositif (1) selon la revendication 12,
**caractérisé en ce que**
par son extrémité inférieure (6), la vis (2) à double filetage est reliée sous la couverture de toit (34) avec une infrastructure du toit (35) et **en ce que** par son extrémité supérieure (5), est reliée au-dessus de la couverture de toit (34) avec une structure porteuse (36) pour des modules photovoltaïques (37).
